# FASCICULE DE BREVET EUROPEEN

(11) **EP 2 712 392 B1**
(45) Date de publication et mention de la délivrance du brevet: **26.09.2018**
(21) Numéro de dépôt: 12725113.0
(22) Date de dépôt: 07.05.2012
(51) Int. Cl.: F01D 25/24, F02C 7/20, F01D 25/16

(54) **SUSPENSION DU CANAL DE FLUX FROID D'UN TURBORÉACTEUR PAR DES BIELLETTES ET DES CHAPES RADIALES SUR LE CARTER D'ÉCHAPPEMENT**
TURBOSTRAHLTRIEBWERK-KALTSTROM-STRÖMUNGSPFAD AUS EINEM ABGASGEHÄUSE DURCH RADIALE SPALTENBEFESTIGUNGEN UND GELENKSTANGEN
TURBOJET ENGINE COLD STREAM FLOW PATH SUSPENDED FROM THE EXHAUST CASE BY RADIAL CREVICE MOUNTS AND LINK RODS

(30) Priorité: 09.05.2011 FR 1153946
(43) Date de publication de la demande: 02.04.2014
(73) Titulaire: Safran Aircraft Engines, 75015 Paris (FR)
(72) Inventeur: RIVIERE, Thomas Gérard, Daniel, F-77550 Moissy-Cramayel Cedex (FR); BELLABAL, François Robert, F-77550 Moissy-Cramayel Cedex (FR); RENON, Olivier, F-77550 Moissy-Cramayel Cedex (FR); SEIZE, Guilhem, F-77550 Moissy-Cramayel Cedex (FR)
(74) Mandataire: Gevers & Orès
(86) Numéro de dépôt international: PCT/FR2012/051011
(87) Numéro de publication internationale: WO 2012/153056

(56) Documents cités:
- EP-A1- 1 902 952
- EP-A2- 1 247 944
- EP-A2- 1 847 457
- EP-A2- 1 930 556
- WO-A2-2010/007226
- US-A- 3 540 682
- US-A- 4 979 872

## Description

Le domaine de la présente invention est celui des turboréacteurs et des organes assurant la liaison entre leurs différentes pièces. Il porte plus particulièrement sur les organes assurant la tenue mécanique du canal de flux froid des turboréacteurs double flux.

Un moteur de propulsion, tel qu'un turboréacteur, peut être monté en divers endroits de l'avion, par accrochage à un mât ou à un pylône appartenant à la structure de ce dernier. Il peut être ainsi suspendu sous la voilure, fixé au fuselage, généralement à l'arrière, ou monté dans l'empennage par des moyens d'accrochage appropriés. Ces moyens d'accrochage ont pour fonction d'assurer la transmission des efforts mécaniques entre le moteur et la structure de l'avion. Les charges à prendre en considération sont notamment le poids du moteur selon l'axe vertical Z, sa poussée selon l'axe X du moteur, et les charges aérodynamiques latérales selon l'axe Y transversal. Les charges à transmettre comprennent aussi la reprise du couple de rotation autour de l'axe du moteur. Ces moyens doivent en outre absorber, sans les transmettre au mât, les déformations subies par le moteur pendant les différentes phases du vol résultant par exemple des variations dimensionnelles dues aux dilatations ou contractions thermiques.

Un mode de suspension, par exemple, dans le cas d'un turbomoteur à soufflante, consiste à accrocher le moteur à un mât appartenant à la structure de l'aile de l'avion par une suspension ou attache avant et une suspension ou attache arrière. La suspension avant est fixée en particulier sur le carter intermédiaire en aval du carter de la soufflante et la suspension arrière au carter d'échappement du flux primaire. Ces deux pièces constituent les éléments structuraux d'une turbomachine, sur lesquels l'ensemble des efforts sont repris. Les turboréacteurs modernes sont des turbomachines double flux à fort taux de dilution, le flux d'air secondaire étant comprimé par un seul étage de compresseur dit soufflante. En sortie de cet étage il est guidé par un conduit directement dans une tuyère pour participer à la poussée du moteur. Il circule ainsi entre le corps principal du moteur, délimité par des carters, et un canal de flux froid (désigné généralement par l'acronyme anglais OFD pour Outer Fan Duct, ou Canal extérieur de soufflante). Pour des raisons de poids ce canal est de façon courante réalisé en matériau composite. Ce canal est fixé sur le moteur par des liaisons situées à ses deux extrémités longitudinales, une première fixation s'effectuant à l'amont sur le carter entourant la soufflante et une seconde à l'arrière sur un anneau de support porté par le carter d'échappement.

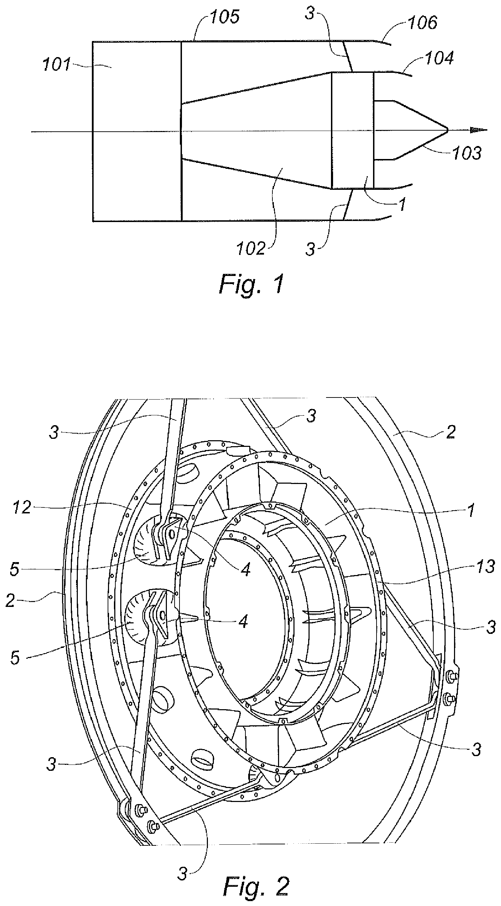

La liaison entre l'anneau de support et ce carter d'échappement s'effectue généralement au moyen de bras qui traversent le flux froid. Dans des réalisations plus récentes, elle peut être également assurée par des bielles profilées, attachées d'une part au canal de flux froid et d'autre part sur le carter d'échappement, ce qui permet une réduction importante de la masse consacrée à cette liaison. Dans ce cas d'attache par bielles la liaison est réalisée par un treillis de bielles, généralement au nombre de six ou de huit, alignées deux à deux, qui se rattachent en trois ou quatre points à l'anneau support, comme cela est représenté sur la figure 2.

On connait, dans l'art antérieur, des bielles qui sont rattachées au carter d'échappement au moyen d'assemblages constitués, sur le carter d'échappement, par un axe qui s'étend radialement à partir du carter et, sur la bielle, par un alésage pratiqué dans l'une de ses extrémités. Si un tel assemblage donne un degré de liberté à la bielle en rotation dans un plan tangent au carter et permet des déplacements axiaux relatifs du carter et du canal de flux froid dus aux dilatations, il nécessite l'ajout de bossages et d'inserts sur le carter d'échappement, l'emploi d'inserts et d'une vis pour reprendre les efforts. De ce fait il présente l'inconvénient de présenter un nombre important de références à gérer et une maintenance plus complexe.

Le document EP1 247 944 A2 constitue un état de l'art antérieur. La présente invention a pour but de remédier à ces inconvénients en proposant un type de liaison entre de l'anneau porteur du canal du flux froid et le carter d'échappement qui ne présente pas les inconvénients de l'art antérieur et qui donne plus de possibilité pour les déplacements relatifs du carter d'échappement avec le canal de flux froid.

A cet effet l'invention a pour objet un turboréacteur double flux comportant un canal de flux froid cylindrique porté par des bielles rattachées à une virole extérieure cylindrique d'un carter d'échappement au niveau de points d'attache, caractérisé en ce que les points d'attache du carter d'échappement sont des chapes dont les oreilles s'étendent radialement à partir de ladite virole extérieure, l'alésage desdites chapes étant orienté selon la direction des génératrices de la virole extérieure.

Cette chape donne un degré de liberté au treillis de bielles, dans un plan radial, pour se déformer et éviter que des efforts trop importants se développent dans les bielles.

Les bielles rejoignent ledit canal de flux froid en étant tangentes à ladite virole extérieure. La direction tangente permet d'orienter l'effort transmis par les bielles au carter d'échappement selon la fibre neutre de la virole du carter d'échappement. Idéalement la direction est parfaitement tangente à la virole mais elle peut légèrement diverger par rapport à cette direction idéale pour des raisons d'intégration mécanique de l'ensemble (cette variante où la direction diverge légèrement n'étant pas revendiquée).

De façon préférentielle les chapes sont en nombres pairs, associées deux à deux en un couple et positionnées sur la circonférence de la virole extérieure de sorte que les bielles fixées sur deux chapes associées rejoignent un même point sur ledit canal de flux froid. Cette disposition facilite les déformations relatives du canal de flux froid et du carter d'échappement et participe ainsi à la réduction des efforts circulant dans les bielles. Avantageusement les chapes sont positionnées de façon que chacune des chapes d'un même couple soit positionnée à côté d'une des chapes d'un couple adjacent.

Dans un mode particulier de réalisation le nombre de couples de chapes est égal à 3, l'ensemble des bielles formant un triangle dont les sommets sont situés sur ledit canal de flux froid.

Dans un autre mode de réalisation le nombre de couples de chapes est égal à 4, l'ensemble des bielles formant un carré dont les sommets sont situés sur ledit canal de flux froid.

Avantageusement le carter d'échappement comporte au moins une dépression sur sa circonférence, dans le fond de laquelle est positionnée la chape correspondante de façon que l'alésage de ladite chape soit situé dans l'alignement du cylindre formé par ladite virole de part et d'autre de ladite dépression. De cette façon les efforts subis par la bielle sont transmis au carter d'échappement sans bras de levier et, donc, sans couple qui serait néfaste pour la tenue mécanique des chapes sur le carter.

Préférentiellement les points d'attaches des bielles sur ledit canal de flux froid sont situés axialement en amont des chapes de la virole extérieure du carter d'échappement. Cette configuration permet un allongement du corps primaire du moteur sous l'effet d'une dilatation supérieure à celle du canal de flux froid, avec un simple étirement des bielles et sans effort radial comme ce serait le cas, dans le cas contraire, avec un point dur associé au passage par l'alignement radial de ses points d'attache sur le carter et sur le canal. Avantageusement l'alésage des chapes est orienté selon l'axe de rotation du turboréacteur et dans lequel les bielles sont des bielles rotulantes, autorisant leur débattement axial par rapport auxdites chapes.

L'invention décrit également un carter d'échappement d'un turboréacteur comportant une virole extérieure cylindrique, sur la circonférence de laquelle sont positionnés des points d'attache pour des bielles destinées à fournir un support au canal de flux froid dudit turboréacteur, pour lequel au moins une desdites attaches est une chape dont les oreilles s'étendent radialement à partir de ladite virole extérieure.

Cette chape donne un degré de liberté au treillis de bielles, dans un plan radial, pour se déformer et éviter que des efforts trop importants se développent dans les bielles.

L'alésage de ladite chape est avantageusement orienté selon la direction des génératrices de la virole extérieure.

Ladite virole extérieure comporte de façon préférentielle au moins une dépression sur sa circonférence, dans le fond de laquelle est positionnée ladite chape de façon que son alésage soit situé dans l'alignement du cylindre formé par ladite virole de part et d'autre de ladite dépression.

L'invention sera mieux comprise, et d'autres buts, détails, caractéristiques et avantages de celle-ci apparaîtront plus clairement au cours de la description explicative détaillée qui va suivre, d'un ou plusieurs modes de réalisation de l'invention donnés à titre d'exemples purement illustratifs et non limitatifs, en référence aux dessins schématiques annexés.

Sur ces dessins :
- la figure 1 est une vue schématique d'un turboréacteur double flux, avec une liaison par bielles entre le canal d'échappement et le canal de flux froid ;
- la figure 2 est une vue en perspective d'un carter d'échappement selon un mode de réalisation de l'invention, relié par un treillis de bielles à un anneau de support du canal de flux froid d'un turboréacteur;
- la figure 3 une vue de détail du carter d'échappement de la figure 2 ;
- la figure 4 est une vue en coupe partielle du carter d'échappement de la figure 2 ;
- la figure 5 est une vue en perspective d'un carter d'échappement selon un second mode de réalisation de l'invention.

En se référant à la figure 1, on voit une représentation stylisée d'un turboréacteur à double flux, comprenant une soufflante 101, un corps primaire 102 comprenant à son aval un carter d'échappement 1 participant à la structure du moteur, et un cône arrière 103. Le flux primaire, qui traverse le corps primaire est éjecté dans une tuyère primaire 104 entourant le cône arrière, tandis que le flux secondaire, qui est issu de la soufflante, est guidé à l'aval de celle-ci par un canal de flux froid 105 se terminant par une tuyère secondaire 106. Le canal de flux froid 105 est rattaché au carter d'échappement 1 par un treillis de bielles 3 qui sont inclinées par rapport à un plan radial du moteur, l'attache sur le canal de flux froid étant positionné en amont par rapport à celle sur le carter d'échappement.

Sur la figure 2 on voit le carter d'échappement 1 entouré par un anneau de support 2 destiné à maintenir, du côté aval, le canal de flux froid 105 de ce turboréacteur. Les efforts associés à ce maintien sont transmis au carter d'échappement par un ensemble de six bielles 3, qui sont fixées à une de leurs extrémités sur l'anneau 2 et à l'autre extrémité sur le carter d'échappement 1 par des fixations en forme de chapes. Telles que représentées sur la figure les bielles 3 sont disposées, deux à deux, tangentiellement au carter d'échappement 3 et forment ainsi un triangle dont les sommets sont situés sur l'anneau de support 2. Elles ont une forme rectiligne, s'étendant entre deux parties terminales en forme d'oeil qui sont destinés à recevoir les axes de chapes qui sont positionnées, pour l'une, sur le carter d'échappement 1 et, pour l'autre, sur l'anneau de support 2. Chaque oeil est percé d'un alésage et est muni d'une partie rotulante, dans lequel passe l'axe de la chape correspondante, ce qui donne à la bielle un degré de liberté en rotation dans un plan tangent au carter d'échappement 1. Quant à sa partie rectiligne elle est aplatie de façon à être profilée pour offrir le moins de résistance possible au flux d'air secondaire qu'elles traversent. Pour des raisons de réduction des coûts par une standardisation des pièces de la turbomachine, les bielles 3 présentent une symétrie par rapport au plan médian de leur partie rectiligne, les yeux ayant la même forme et le profil de la partie rectiligne étant un profil symétrique ; ainsi chaque oeil peut être placé indifféremment, du côté du carter d'échappement 1 ou de celui de l'anneau support 2.

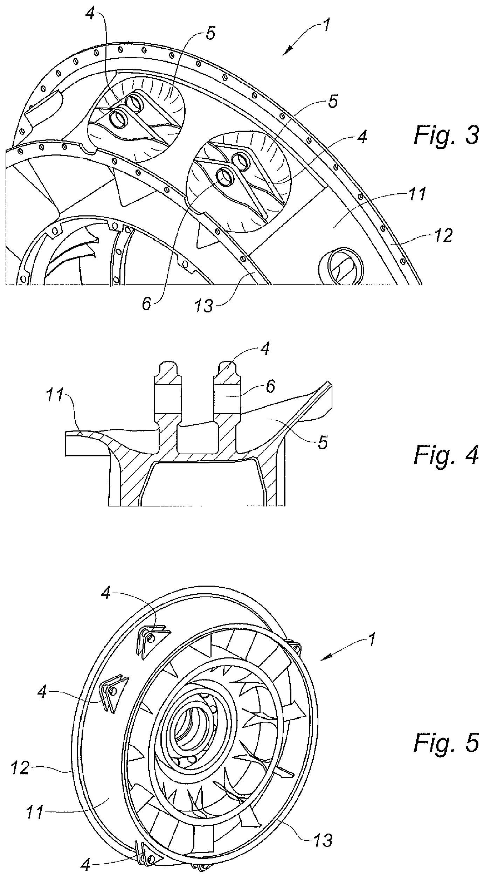

La figure 3 montre un secteur du carter d'échappement 1, avec sa virole extérieure 11 délimitée par une bride amont 12 et une bride aval 13, pour le rattacher aux pièces attenantes du corps primaire 102. La virole extérieure 11 comporte six chapes 4 sur sa circonférence, qui sont positionnées deux par deux en côte à côte et servent de points de fixation à des biellettes 3 de maintien du canal de flux froid 105, telles que décrites ci-dessus. Pour des raisons de tenue mécanique du carter d'échappement 1, les chapes sont positionnées en regard des bras de ce carter qui traversent le flux primaire et qui assurent la solidarisation de la virole extérieure avec une virole intérieure et avec les pièces internes porteuses des paliers des arbres de rotation.

Les oreilles de ces chapes 4 sont orientées radialement par rapport à la virole 11, et s'étendent sur la circonférence de celle-ci de sorte que l'axe (non représenté) qui les traverse ait une direction sensiblement axiale (en référence à l'axe de rotation du moteur). Cette configuration donne aux bielles 3 un degré de liberté dans le plan radial, ce qui autorise des déformations pour le triangle formé par les six bielles et permet d'éviter que celles-ci aient à supporter des efforts en flexion. Leur dimensionnement peut alors être calculé sans prendre en compte de tels efforts de flexion, ce qui diminue d'autant leur masse.

Il convient de noter que, dans le mode de réalisation représenté sur les figures 3 et 4, chaque chape est placée dans une dépression 5 pratiquée dans la virole extérieure 11. La figure 4 montre, plus en détail, le positionnement d'une chape 4 dans cette dépression 5.

La virole extérieure 11, dont la forme générale est globalement cylindrique de révolution autour de l'axe de rotation du moteur, présente à l'endroit d'accrochage des six bielles 3, un enfoncement qui forme une dépression 5 s'étendant, circonférentiellement, de part et d'autre de la chape 4 et, axialement, du milieu de la virole vers ses brides amont 12 et aval 13. Les oreilles de la chape sont ainsi fixées sur la virole au fond de cette dépression, ce qui a pour effet d'abaisser l'alésage 6 de la chape et de le rapprocher radialement du rayon de la virole 11 hors dépression. Du fait de cette dépression la bielle 3, qui est fixée sur la chape 4 par un axe traversant l'alésage 6, exerce sa force de traction ou de poussée dans une direction qui est tangente à la circonférence de la virole 11, hors dépression. La reprise de ces efforts par la virole s'effectue directement selon la direction de ses fibres et non pas avec un décalage qui produirait un bras de levier et un couple néfaste à sa tenue mécanique.

La figure 5 représente une variante d'une virole selon l'invention. Dans ce second mode de réalisation les chapes 4, ici aussi, s'étendent selon la circonférence de la virole extérieure 11 et ont leurs oreilles orientées radialement. En revanche pour des raisons de simplification de la fabrication du carter d'échappement 1, la virole extérieure 11 ne présente pas de dépression au niveau de l'attache des chapes 4. Celles-ci font saillie de la circonférence, tout en gardant une orientation qui donne une direction axiale à leurs alésages. La pénalité due à l'existence d'un bras de levier pour les efforts transmis par la bielle 3 est compensée par la facilité apportée à la fabrication et par la réduction de coût associée.

Afin de donner une liberté de mouvement à l'ensemble du treillis de bielles dans le sens axial, et ainsi permettre la dilatation du corps primaire qui a, en utilisation, une température plus élevée que celle du canal de flux froid, les bielles 3 sont orientées de façon non parfaitement radiale lors du montage. Les attaches de ces bielles sur le canal de flux froid 105, c'est-à-dire en fait l'emplacement de l'anneau support 2, sont positionnées légèrement en amont des chapes 4 du carter d'échappement 1. Cette configuration, qui est visible, de façon exagérée sur la figure 1, évite des contraintes en compression trop importantes dans les bielles 3 en leur permettant de s'étendre et d'accompagner le déplacement vers l'arrière du corps primaire. La dilatation du corps primaire, qui se traduit en fait par un recul du carter d'échappement 1 par rapport à l'anneau support 2 et, par conséquent, par une rotation des bielles 3 par rapport à leurs chapes de maintien, que ce soit dans une chape portée par l'anneau support ou dans la chape 4 du carter d'échappement 1. Ce recul est rendu possible, d'une part, par l'élasticité longitudinale de la partie rectiligne de la bielle et, d'autre part, par le fait qu'il s'agit d'une bielle rotulante, c'est dire qu'une rotule assure la liaison entre la partie rectiligne et l'oeil de la bielle.

## Revendications

1. Turboréacteur double flux comportant un canal extérieur de flux froid (105) cylindrique porté par des bielles (3) rattachées à une virole extérieure cylindrique (11) d'un carter d'échappement (1) au niveau de points d'attache (4), les points d'attache du carter d'échappement étant des chapes dont les oreilles s'étendent radialement à partir de ladite virole extérieure, l'alésage (6) desdites chapes étant orienté selon la direction des génératrices de la virole extérieure (11), **caractérisé en ce que** les bielles rejoignent ledit canal extérieur de flux froid (105) en étant tangentes à ladite virole extérieure.

2. Turboréacteur selon la revendication 1, dans lequel les chapes sont en nombres pairs, associées deux à deux en un couple et positionnées sur la circonférence de la virole extérieure (11) de sorte que les bielles fixées sur deux chapes associées rejoignent un même point sur ledit canal extérieur de flux froid (105).

3. Turboréacteur selon l'une des revendications 1 ou 2, dans lequel les chapes (4) sont positionnées de façon que chacune des chapes d'un même couple soit positionnée à côté d'une des chapes d'un couple adjacent.

4. Turboréacteur selon l'une des revendications 2 ou 3, dans lequel le nombre de couples de chapes est égal à 3, l'ensemble des bielles (3) formant un triangle dont les sommets sont situés sur ledit canal extérieur de flux froid.

5. Turboréacteur selon l'une des revendications 2 ou 3, dans lequel le nombre de couples de chapes est égal à 4, l'ensemble des bielles (3) formant un carré dont les sommets sont situés sur ledit canal extérieur de flux froid.

6. Turboréacteur selon l'une des revendications 1 à 5, dans lequel le carter d'échappement comporte au moins une dépression (5) sur sa circonférence, dans le fond de laquelle est positionnée la chape correspondante (4) de façon que l'alésage (6) de ladite chape soit situé dans l'alignement du cylindre formé par ladite virole de part et d'autre de ladite dépression.

7. Turboréacteur selon l'une des revendications 1 à 6, dans lequel les points d'attaches des bielles sur ledit canal extérieur de flux froid sont situés axialement en amont des chapes (4) de la virole extérieure (11) du carter d'échappement (1).

8. Turboréacteur selon l'une des revendications 1 à 7, dans lequel l'alésage des chapes est orienté selon l'axe de rotation du turboréacteur et dans lequel les bielles (3) sont des bielles rotulantes, autorisant leur débattement axial par rapport auxdites chapes.

## Patentansprüche

1. Zweistrahl-Turbostrahltriebwerk, das einen zylindrischen äußeren Kaltstrom-Strömungspfad (105) aufweist, der von Gelenkstangen (3) getragen wird, die an einem zylindrischen äußeren Mantel (11) eines Abgasgehäuses (1) an Befestigungspunkten (4) angebracht sind, wobei die Befestigungspunkte des Abgasgehäuses Halterungen sind, deren Ansätze sich radial vom äußeren Mantel aus erstrecken, wobei die Bohrung (6) der Halterungen in der Richtung der Mantellinien des äußeren Mantels (11) ausgerichtet sind, **dadurch gekennzeichnet, dass** die Gelenkstangen auf den äußeren Kaltstrom-Strömungspfad (105) treffen, indem sie tangential zu dem äußeren Mantel verlaufen.

2. Turbostrahltriebwerk nach Anspruch 1, wobei die Halterungen in geradzahliger Anzahl vorliegen und jeweils zu zweit paarweise zugeordnet sind und derart am Umfang des äußeren Mantels (11) positioniert sind, dass die Gelenkstangen, die an zwei zugeordneten Halterungen fixiert sind, an einem selben Punkt auf den äußeren Kaltstrom-Strömungspfad (105) treffen.

3. Turbostrahltriebwerk nach einem der Ansprüche 1 oder 2, wobei die Halterungen (4) derart positioniert sind, dass jede der Halterungen eines selben Paars neben einer der Halterungen eines benachbarten Paars positioniert ist.

4. Turbostrahltriebwerk nach einem der Ansprüche 2 oder 3, wobei die Anzahl der Halterungenpaare gleich 3 ist, wobei die Gruppe der Gelenkstangen (3) ein Dreieck bildet, dessen Spitzen sich an dem äußeren Kaltstrom-Strömungspfad befinden.

5. Turbostrahltriebwerk nach einem der Ansprüche 2 oder 3, wobei die Anzahl an Halterungspaaren gleich 4 ist, wobei die Gruppe der Gelenkstangen (3) ein Quadrat bildet, dessen Spitzen sich an dem äußeren Kaltstrom-Strömungspfad befinden.

6. Turbostrahltriebwerk nach einem der Ansprüche 1 bis 5, wobei das Abgasgehäuse mindestens eine Vertiefung (5) an seinem Umfang aufweist, auf deren Boden die entsprechende Halterung (4) derart positioniert ist, dass die Bohrung (6) der Halterung mit dem Zylinder fluchtet, der durch den Mantel auf beiden Seiten der Vertiefung gebildet wird.

7. Turbostrahltriebwerk nach einem der Ansprüche 1 bis 6, wobei sich die Befestigungspunkte der Gelenkstangen an dem äußeren Kaltstrom-Strömungspfad axial stromaufwärts der Halterungen (4) des äußeren Mantels (11) des Abgasgehäuses (1) befinden.

8. Turbostrahltriebwerk nach einem der Ansprüche 1 bis 7, wobei die Bohrung der Halterungen entlang der Drehachse des Turbostrahltriebwerks ausgerichtet ist, und wobei die Gelenkstangen (3) Kugelgelenkstangen sind, die eine axiale Ausfederung derselben im Verhältnis zu den Halterungen zulassen.

## Claims

1. A bypass turbojet engine comprising a cylindrical outer fan duct (105) borne by link rods (3) attached to a cylindrical outer shell ring (11) of an exhaust case (1) at attachment points (4), the attachment points of the exhaust case being clevis mounts including lugs that extend radially from the outer shell ring, a bore (6) of the clevis mounts being oriented in a direction of generatrices of the outer shell ring (11), **characterized in that** the link rods meet the outer fan duct (105) at a tangent to the outer shell ring.

2. The turbojet engine as claimed in claim 1, wherein the clevis mounts are in an even number, are combined in twos into a pair and positioned on the circumference of the outer shell ring (11) so that the link rods fixed to two associated clevis mounts meet at one and a same point on the outer fan duct (105).

3. The turbojet engine as claimed in one of claims 1 or 2, wherein the clevis mounts (4) are positioned such that each of the clevis mounts of one and a same pair are positioned next to one of the clevis mounts of an adjacent pair.

4. The turbojet engine as claimed in one of claims 2 or 3, wherein a number of pairs of clevis mounts is equal to 3, all of the link rods (3) together forming a triangle with vertices situated on the outer fan duct.

5. The turbojet engine as claimed in one of claims 2 or 3, wherein a number of pairs of clevis mounts is equal to 4, all the link rods (3) together forming a square with vertices situated on the outer fan duct.

6. The turbojet engine as claimed in one of claims 1 to 5, wherein the exhaust case includes at least one depression (5) on its circumference, in a bottom of which depression the corresponding clevis mount (4) is positioned such that the bore (6) of the clevis mount is aligned with the cylinder formed by the shell ring on either side of said depression.

7. The turbojet engine as claimed in one of claims 1 to 6, wherein the attachment points of attachment of the link rods to the outer fan duct are situated axially upstream of the clevis mounts (4) of the outer shell ring (11) of the exhaust case (1).

8. The turbojet engine as claimed in one of claims 1 to 7, wherein the bore of the clevis mounts is oriented along an axis of rotation of the turbojet engine and wherein the link rods (3) are ball-ended link rods that allows them some axial displacement with respect to the clevis mounts.
